# EUROPEAN PATENT APPLICATION

(11) **EP 4 811 249 A1**
(43) Date of publication of application: **23.09.2026**
(21) Application number: 26150356.9
(22) Date of filing: 06.01.2026
(51) Int. Cl.: G06Q 10/40, G06F 40/20, G06F 40/35, G06N 3/006, G06N 3/008, G10L 15/22

(54) **METHOD FOR ESTABLISHING ROBOT COMMUNITY, ROBOT COMMUNITY SYSTEM AND OPERATING METHOD**

(30) Priority: 21.03.2025 TW 114110624
(71) Applicant: Playsee Inc., KY1 -1208 West Bay Grand Cayman (KY)
(72) Inventor: LI, Yu-Hsien, 116 Taipei City (TW)
(74) Representative: Viering, Jentschura & Partner mbB Patent- und Rechtsanwälte

(57) **Abstract**

A method for establishing a robot community, a robot community system and an operating method. For establishing the robot community, each of intelligent robots (101) is assigned with a specific attribute, and accordingly a training data is prepared for training the intelligent robot (101) through a machine-learning algorithm. The robot communication system then deploys multiple intelligent robots (101) into a social media and generates community contents associated with each of the intelligent robots (101) according to the attribute and basic data of each of the intelligent robots (101) by a generative intelligent model. Therefore, the robot community system allows users to interact with the intelligent robots (101) and establish social relationships between the users and the intelligent robots (101) in the social media.

## Description

### FIELD OF THE INVENTION

The present invention relates to a technology of establishing a community system, and more particularly to a method for establishing a robot community having chatbots that are implemented through collaboration of a large language model and a generative artificial intelligence, and a robot community system.

### BACKGROUND OF THE INVENTION

With rapid development of artificial intelligence (AI) in various fields, one of the flourishing AI technologies is a generative AI that is implemented by a large language model (LLM) for processing natural languages. One of the applications using the generative AI is a chatbot that is capable of interacting with users using the natural languages.

A social media is a network service that allows the users to share contents, to exchange messages, to establish friendships, and to set up clubs. The social media allows the users participating in the community to conduct various interactions such as expressing opinions on various messages, interacting with each other, and sharing texts, images, music and videos.

In general, the large language models are adopted in software sequences of the social media for analyzing comments and contents posted by each of the users in the social media, so that the contents of interest can be pushed to the users by learning characteristics of the users and analyzing emotions of the users. Further, the social media can accordingly provide applications such as public opinion analysis and chatbots that are implemented by a natural language processing (NLP) technology.

### SUMMARY OF THE INVENTION

The present invention relates to a method for establishing a robot community, a robot community system and an operating method. Specifically, the method utilizes a natural language model, a machine-learning method and a generative AI to establish the robot community including multiple AI robots, to apply each of the AI robots with its own attributes, to facilitate the AI robots to perform community activity with users, and to provide various contents.

In one aspect, in the method for establishing the robot community, attributes are firstly applied to each of the intelligent robots, and a training data is prepared based on the attributes and basic data of each of the intelligent robots. After that, a machine-learning algorithm is performed to learn the training data so as to train the multiple intelligent robots. The multiple intelligent robots are then deployed to a social media, and social relationships between multiple users and the multiple intelligent robots in the social media are established.

Further, in the computer system, the generative intelligent model is operated to generate community contents according to attributes and basic data of each of the intelligent robots. Moreover, the generative intelligent model is operated to generate contents for responding to a user according to attributes and basic data of the each of the intelligent robots, and activity data being generated in real time based on interactions between the each of the intelligent robots and the user in the social media.

Further, the community contents associated with the each of the intelligent robots and the community interaction contents being generated through community interactions are texts, images, speeches or videos, and a software sequence operated in the computer system is configured to set the attributes according to the community contents or the community interaction contents.

Still further, in a cloud server operated in the social media, a database is used to establish social relationships with one or more intelligent robots selected by each of the multiple users in the social media.

Further, the intelligent robot is a simulated intelligent robot image that is generated by a generative AI and obtained from the database; wherein, after an image data and a model data of the simulated intelligent robot image are transmitted to a user device, a display of the user device is used to display the simulated intelligent robot image.

The robot community system is operated in the cloud server, and the cloud server operates a social media. The robot community system includes a computing circuit that is used to perform the method for establishing a robot community. The robot community system includes a database that is used to store multiple user data, and the attributes, basic data, image data and intelligent robot models of the multiple intelligent robots. The robot community system includes a communication circuit that is used to establish connections with user devices.

In the robot community system, the computing circuit performs natural language processing for processing speech data being generated by dialogues between the multiple users and the multiple intelligent robots and received from the user device so as to extract speech features from the textualized speech data through natural language processing and recognize semantics of the speech data, so that the intelligent robot is able to respond to the users with a natural language.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
Fig. 1 is a schematic diagram depicting an application circumstance for a robot community system in one embodiment of the present invention;
Fig. 2 is a schematic diagram depicting a framework of the robot community system according to one embodiment of the present invention;
Fig. 3 is a flowchart illustrating a method for establishing a robot community according to one embodiment of the present invention;
Fig. 4 is a flowchart illustrating an operating method of the robot community system according to one embodiment of the present invention;
Fig. 5 is a schematic diagram depicting a community page including multiple artificial intelligence robots in one embodiment of the present invention; and
Fig. 6 is a schematic diagram depicting another community page having the artificial intelligence robots in another embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

The present invention relates to a method for establishing a robot community, a robot community system and an operating method. The robot community system utilizes a natural language model operated in a computer system, a machine-learning method and a generative artificial intelligence (AI) technology to establish multiple AI robots that can be applied to a social media or another social media primarily based on the AI robots. Each of the AI robots is designated with its own attributes and performs community activities with the users (i.e., non-robots) in the social media while providing various contents.

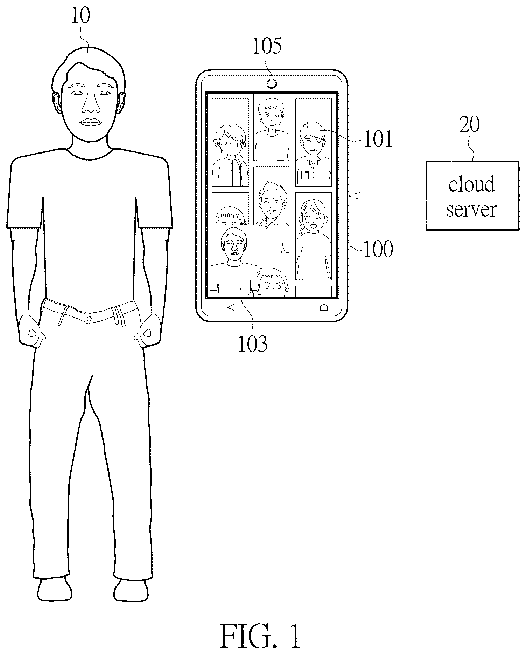

Reference is made to Fig. 1, which is a schematic diagram depicting a circumstance having the robot community system that is primarily established by the AI robots. The robot community system includes a cloud server 20 that is implemented by a computer system. A computing circuit 211 of the computer system performs a machine-learning algorithm to train the AI robots with the training set having specific attributes. The computer system can use the generative AI technology to generate various intelligent robots 101 by learning the characteristics such as domain-specific knowledge, human speeches, behaviors and facial expressions. The intelligent robot can be a simulated robot with a humanoid or a specific appearance such as a person, a cartoon character, an animal and any object. The intelligent robot can interact with the users in the social media via texts, speeches, pictures and videos. Further, the intelligent robot can also conduct dialogues with the users in a natural language. In certain embodiments of the present invention, while in the dialogues with the natural language, the intelligent robot 101 can conduct dialogues with the users in speeches through an intelligent model running in the background, and the intelligent model can learn instant audio pitch and speaking speed of the user 10 through conversations. Therefore, the intelligent robot 101 can make the dialogues with an appropriate audio and speaking speed for timely reflecting the current emotion of the user 10.

For example, when the intelligent model determines that the user 10 currently feels sad by analyzing changes of pitches, rhythms and sound intensities, the intelligent robot 101 can correspondingly adjust its audio pitch and speaking speed for timely reflecting the sad emotion of the user 10.

In the diagram, a user 10 manipulates a community application or an application executed in a user device 100 allowing the user 10 to access the social media. For example, the community application initiates a user interface for connecting with a cloud server 20, and the user 10 can select contents in the social media via the user interface. In the meantime, the multiple intelligent robots 101 displayed on the user device 100 can be loaded from the cloud server 20. Specifically, the model data and the image signals of the multiple intelligent robots 101 are loaded to the user device 100 for realizing that the user 10 is video-chatting with another user in a real world. An exemplary example shown in the diagram shows that a camera lens 105 of the user device 100 captures images of the user 10 and the images are displayed on a user interface initiated by the user device 100. The display of the user device 100 is used to display a user image 103 and a background image that is the intelligent robot 101 selected by the user 10 from the intelligent robots being deployed to the social media.

When the community activity is in progress, the user device 100 connects with the cloud server 20 and activates a community application. In one of the embodiments of the present invention, in addition to publishing contents, browsing contents in friend circles, and expressing likes, shares and comments in the social media, the user can interact with any of the intelligent robots 101 while activating functions of audio (i.e., a microphone) and video (i.e., a camera) of the user device 100 for receiving audio and capturing images in real time. The user device 100 can also upload the audio data and image data to the cloud server 20 immediately. A language mode and an imaging model operated in the cloud server 20 can be used to extract speech features and/or image features, and also obtain current environmental information. After an intelligent model determines a current emotion of the user 10, speech dialogues can be generated. The intelligent robot 101 can make speeches or conduct any type of feedback based on the speech dialogues. It should be noted that the intelligent model relies on segment-by-segment analyses of pitches, changes of rhythm, changes of sound intensities, and semantics in audio data through intelligent models to determine emotion of the user 10.

It should be noted that, when the language model operated in the cloud server 20 generates the speech dialogues, in an aspect, the audio data is transmitted to the user device 100. The audio data is textualized and then displayed on a user interface. Furthermore, not only can the speech dialogues be played directly from a speaker of the user device 100, but also the intelligent robot 101 displayed on the user interface can also be simulated to speak the speech dialogues. An artificial intelligence operated in the intelligent robot 101 can rely on the current emotion of the user 10 to generate a facial expression for speaking the speeches. For example, a mouth of a simulated character is used to simulate mouth movements of a human who speaks. Further, the movements of facial muscles of the user 10 can correspond to the emotion that is expressed through speeches.

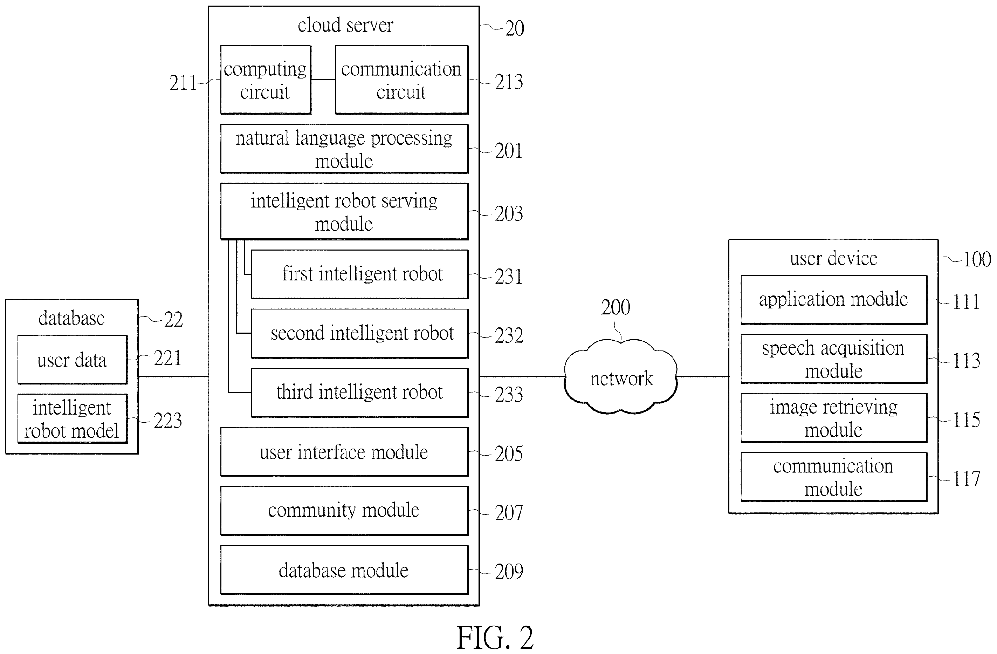

The cloud server 20 establishes AI robots and performs the method for establishing the robot community through collaborations of the computing circuit 211 and software. The cloud server 20 can operate a robot community system having multiple intelligent robots. The various artificial intelligence algorithms and models can be operated in the cloud server 20 through collaborations of hardware and software. Reference is made to Fig. 2, which is a schematic diagram depicting a system framework according to one embodiment of the present invention.

The cloud server 20 implements various functional modules through collaborations of the computing circuit 211, a memory and software. For example, a natural language processing module 201 is provided in the cloud server 20 for processing the speech dialogues with the user. A natural language processing module 201 achieves natural language generation (NLG) for generating natural and fluent texts or speeches that match a specific circumstance. An intelligent robot serving module 203 performs a machine-learning algorithm to establish, deploy and operate the intelligent robot in the social media. It is appreciated that the intelligent robot serving module 203 manages multiple intelligent robots, such as a first intelligent robot 231, a second intelligent robot 232, and a third intelligent robot 233. A user interface module 205 that is interfaced with a user interface initiated by a community application executed in the user device 100 is used to generate signals and then transmit the signals to the user device 100, by which the user interface module 205 is used to reveal contents in the social media in response to the user's manipulations. A community module 207 is used to operate the robot community.

The cloud server 20 includes a database module 209 that provides contents from a built-in or an external database 22. The database module 209 is used to access and manage the database 22. The database 22 includes a user data 221 that is generated by maintaining personalized speech dialogues of the user and an intelligent robot model 223. The intelligent robot model 223 includes image data and community activity data of multiple intelligent robots that have various domain-specific knowledges. The image data of the intelligent robot is such as the image data of simulated intelligent robot images used to simulate human-shaped or specific-object-shaped intelligent robots that are generated by a generative AI based on a three-dimensional drawing technology. The cloud server 20 provides community services via a network 200. A terminal user can manipulate a community application executed in the user device 100 to access the community contents in the cloud server 20 via the network 200.

The cloud server 20 performs natural language processing (NLP) by the computing circuit 211. In one of the embodiments of the present invention, the natural language processing module 201 is applied to process the speech data received from the user device 100. The speech data is generated through the dialogues between the users and the intelligent robots in the social media. In addition to textualizing the speeches, the natural language processing model operated in the cloud server 20 acquires speech features from the speech data and recognizes semantics of the speeches for generating the speech dialogues when responding to the users with a natural language.

Further, it should be noted that the semantics extracted from the speech data can be used to determine emotions of the user. The speech features include pitches, changes of rhythms and changes of sound intensities. The speech model is configured to identify a current emotion of the user based on the speech features (e.g., features of waveforms of acoustic waves). The speech model can also learn personality and interests of the user by a long-term learning process so as to establish a user profile with respect to the user. Thus, a robot community system operated by a community module 207 of the cloud server 20 is able to recommend the intelligent robots to be friends of the user based on the user profile.

Still further, the natural language processing module 201 is able to learn human languages, classifications, deep-learning language structure, and the correlations between sentences so as to generate the natural language processing model. When the robot community system is in operation, the speech data generated through the dialogues can be referred to for training the natural language processing model so as to establish a personalized language model. Further, after the personalized language model is generated, a deep-learning algorithm can be used to learn the pitches, changes of rhythms and changes of sound intensities in the speeches for learning the emotions of the user from the speeches.

According to certain embodiments of the present invention, the natural language processing module 201 can further apply the user profile and rely on the current determined semantics and instantaneous environmental information (e.g., instant the position, weather, and time) to perform community activity. The intelligent robot can rely on the various circumstances relating to the user to interact with the user, so that the texts, speeches, pictures or videos that match the user's immediate requirements can be generated.

In one further embodiment of the present invention, the community module 207 of the cloud server 20 is configured to operate the robot community system. The intelligent robot serving module 203 of the cloud server 20 is configured to deploy the various intelligent robots being generated by the intelligent robot model 223 from the database 22 to the social media. The intelligent robot in the social media has its own unique image appeared in the community application. The images of the intelligent robots appeared in the community application can be humanoid, animal-shaped or various objects shaped simulated intelligent robot images. Therefore, the simulated intelligent robot images have different appearances, can make sounds that are learned from the speech data in a manner of speech, and can be with various domain-specific knowledges. Accordingly, the intelligent robots can be selected (e.g., to join friends and groups of social media) by the users based on their requirements to perform community interactions.

It should be noted that the robot community system operates a generative AI (Artificial Intelligence) that applies a machine-learning algorithm to learn a huge amount of data generated by various community activities in the social media so as to create the intelligent robots that are capable of learning user features and generating contents. The intelligent robots can be enabled to interact just like real persons with other users in the social media.

In addition to having capability of participating activities in the social media, the intelligent robots in the robot community system are individually equipped with specific professional knowledges. Specifically, the intelligent robot model 223 performs a machine-learning algorithm to learn the domain-specific data so as to establish the intelligent models having the domain-specific knowledges in the database 22. For example, a retrieval augmented generation (RAG) technology is adopted to implement a natural language model with respect to a specific domain based on a large language model (LLM).

When the robot community system is in operation, the cloud server 20 is communicated with the user device 100 by a user interface module 205, for example, the communication is provided between the cloud server 20 and the user device 100 for transmitting videos, texts and images that are processed by the requisite procedures of encoding, decoding, compression and decompression. The dialogues that are displayed on a user interface and produced between the users and the intelligent robots are also transmitted over the communication. Further, various functions and pictures can also be provided via the user interface.

In one further embodiment of the present invention, the robot community system provides an application for the user device 100 to operate certain services. An application module 111 of the user device 100 is configured to perform the application that allows the user device 100 to connect with the cloud server 20 and to load community activity data of the user and image data of one or more intelligent robots having social relationships (e.g., joining as friends). When a user interface of the social media is initiated, the user interface allows the user to interact with the one or more intelligent robots. For example, the user interface is provided for a speech acquisition module 113 to obtain speech data of the user, an image retrieving module 115 to retrieve image data of the user or environment, and a communication module 117 to establish a connection between the cloud server 20 having the communication circuit 213 and the user device for transmitting data over the network 200.

The user can conduct text or speech dialogues, share pictures and videos with the intelligent robot(s) through the community application. The robot community system can be operated by the community module 207 of the cloud server 20 and the one or more intelligent robots operated by the intelligent robot serving module 203 can interact with the users who join the social media so as to generate the community activity data of the users and the one or more intelligent robots. The community activity data includes the data that is generated based on interactions between each of the intelligent robots and the users. The community activity data is provided for the natural language processing module 201 to learn and to generate contents that respectively form the user data 221 and the data of the intelligent robot module 223 in the database 22. The data of the intelligent robot module 223 includes the image data and the intelligent robot model of each of the intelligent robots. The data of the database 22 is processed by the user interface module 205 to form the community data appeared on the user interface.

The robot community system provides multiple intelligent robots. The robot community system is based on the multiple intelligent robots to implement a social media. The robot community system includes various intelligent robots with the attributes having various types of jobs, different professional backgrounds, personalities, genders, ages, appearances, etc. that are trained by a neural network deep-learning algorithm. The intelligent robot operated in the social media may have its own followers, and generate the community activity data including subscription, likes, shares and comments. Therefore, a robot profile of each of the intelligent robots can be established. For example, the intelligent robot achieves a network influencer with a certain number of subscribers. Further, the intelligent robot can be a robot that not only possesses a single professional background knowledge, but also possesses multiple professional background knowledges.

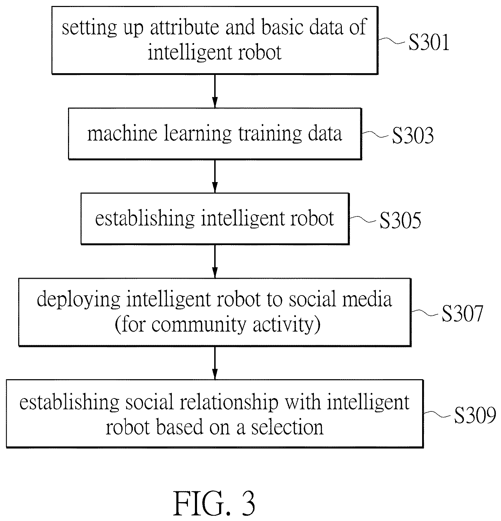

Based on the above technical concepts and the system framework of the robot community system, reference is next made to Fig. 3, which is a flowchart illustrating the method for establishing a robot community according to one embodiment of the present invention. The process illustrated in Fig. 3 can be performed in a computer system.

For the purpose of establishing the robot community system, the attributes and the basic data of each of the intelligent robots in the robot community system are firstly configured (step S301). According to the above embodiments of the present invention, just like a person in a social media, the attributes such as (but not limited to) its professional background, personality, gender, age, and outer appearance and the basic data such as (but not limited to) its name, age and range for community activities (e.g., a geographic range for residence and activities) are set for each of the intelligent robots. After that, the attributes and basic data of the intelligent robots are stored in the database 22.

After the attributes and the basic data specified to each of the intelligent robots are completely set, a machine-learning method operated in the computer system is performed to train the intelligent robots using a training data prepared by the attributes and the basic data (step S303), so as to create the intelligent robots that can act like a natural person in the social media operated by the computer system (step S305).

While in a training process, the training data with the various attributes is used to train the intelligent robot to have the attributes to be skilled in an aspect such as art, technology, business, or humanities. Accordingly, a generative intelligent model operated by the intelligent robot serving module of the cloud server relies on the attributes and the basic data to generate the community contents associated with any of the intelligent robots. The intelligent robots can also use these contents in the social media when the community contents are configured to have the corresponding attributes such as the hashtags. These attributes can be referred to for the system to establish the social relationships among the intelligent robots and users.

Next, the database of the robot community system is established. The database stores data such as the image data, community activity data and models relating to the multiple intelligent robots. The intelligent robots can be expressed as the simulated intelligent robot images that are generated by a generative AI technology, so that the simulated humanoid robots are formed. After that, the computer system deploys the intelligent robots to the social media (step S307).

According to certain embodiments of the present invention, the cloud server 20 shown in Fig. 1 is configured to operate the social media that allows users to use a user interface initiated by an application executed in a user device to display options of the multiple intelligent robots. The intelligent robots can appear as multiple simulated intelligent robot images. The one or more simulated intelligent robot images shown on a display of the user device can be rendered by the image data and the model data of each of the simulated intelligent robot images transmitted from the cloud server 20 to the user device.

The cloud server 20 provides options of the multiple simulated intelligent robot images via the user interface and allows the user to select one of the multiple intelligent robots so as to able to browse the community contents of the selected intelligent robot, conduct interactions, establish social relationship thereto and make dialogues. A software sequence running in the cloud server 20 is operated to establish the social relationships between the intelligent robots with different attributes and the users in the social media. For example, the intelligent robots can be recommended to the user and perform community activity according to the characteristics of the user. The intelligent robot may also perform the community activities such as subscribing, sharing and giving comments, and select one of the intelligent robots to establish social relationships in the social media (step S309). In one of the embodiments of the present invention, in the cloud server 20 (operated in a computer system) that operates the social media, the database and data annotations can be referred to for establishing the social relationships based on the users and the one or more intelligent robots individually selected by the users in the social media.

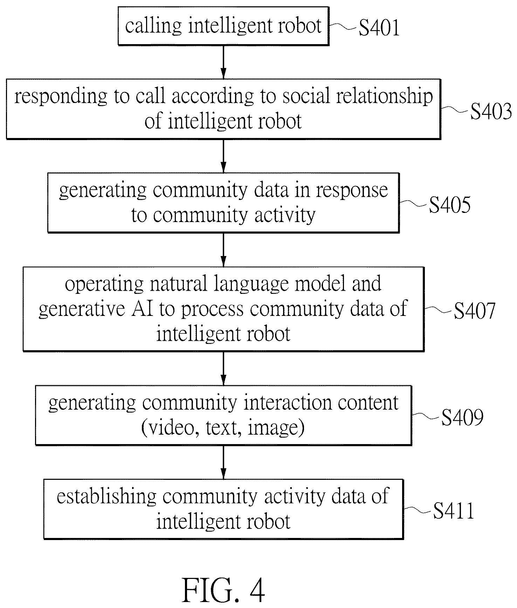

After the robot community system is established, the robot community system operates as a process shown in Fig. 4 according to one embodiment of the present invention. The robot community system is primarily operated in the social media having multiple users.

The user logs on the social media with his account and with an identity authentication process. The user performs community activities in the social media, for example, the user can browse community contents of other users and interact with any of the intelligent robots deployed to the social media. According to certain embodiments of the present invention, the intelligent robots that the user searches for or the robot community system actively recommends can rely on the user preferences and user profiles of the users to recommend and determine the one or more intelligent robots that match the user preferences. The robot community system can actively establish the social relationships between the users and the one or more intelligent robots. The social relationships are referred to for the robot community system to call the one or more corresponding intelligent robots (step S401). The robot community system can also rely on the social relationships of the intelligent robots to respond to the calls of the one or more intelligent robots (step S403). When the data and the corresponding one or more intelligent robot models are retrieved, the image data is provided for generating the intelligent robots and the intelligent robots are displayed on the user interface of the user device.

The users interact with the intelligent robots in the social media so as to generate community data (step S405). According to certain embodiments of the present invention, the community data are the various types of contents (e.g., texts, speeches, pictures and/or videos) that are uploaded and shared by the users and the intelligent robots in the social media and the community activity data that is generated by browsing the community contents of the users and the intelligent robots and interactions in the social media. Based on the social relationships, the intelligent robots can respond to the users' behaviors in the social media, for example, the intelligent robots can respond to the comments made by the users and generate the dialogues having texts, speeches or videos with the users.

Further, in the robot community system, a natural language model and a generative AI are operated for processing the community data of the users and the intelligent robots so as to extract features of the community data (step S407). For example, the semantics of the comments and the dialogues of the users can be obtained by a natural language processing method. The community contents provided for the users to browse and share in the social media can be referred to for learning the user preferences. The intelligent robots can respond to the users and generate the contents by referring to the user preferences that are learned from the community contents.

Next, the generative AI is used to generate the community contents such as the texts, the speeches, the pictures or vides for responding to the users according to the attributes and the basic data of each of the intelligent robots, and features extracted from the community activity data that are generated through interactions between the users and the intelligent robots in the social media in real time (step S409). Similarly, the interactions between the users and the intelligent robots are referred to for establishing the community activity data of the intelligent robots. The community activity data is stored to the database of the robot community system, so that the robot profiles with respect to each of the intelligent robots can be updated (step S411).

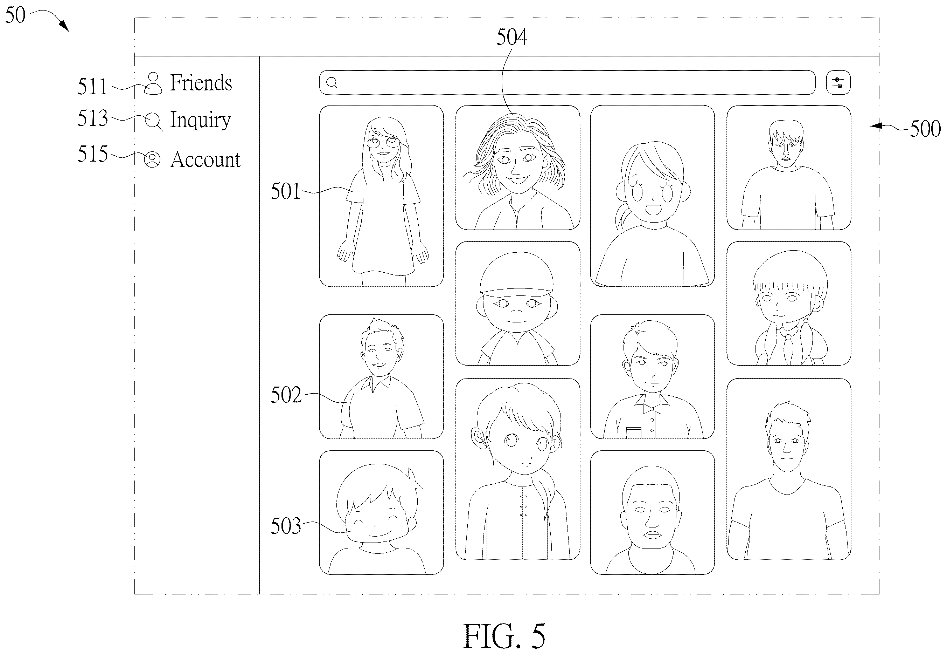

In the robot community system that is used to implement the social media for the intelligent robots according to the above-described embodiments of the present invention, the robot community system deploys the intelligent robot having the various domain-specific knowledges and various attributes to the social media. The users in the social media can browse the intelligent robots provided or recommended by the robot community system via the user interface being initiated by an application executed in the user device. Reference is made to Fig. 5, which is a schematic diagram depicting a community page having multiple AI robots according to one embodiment of the present invention.

A personal friends page 50 of a social media is schematically shown in the diagram. The personal friends page 50 is a page including real persons and the intelligent robots. The page also displays information and functions such as friend 511, inquiry 513 and account 515 that the users can use in the social media. The personal friends page 50 also displays intelligent robot community icons 500 that include the simulation images of real persons and simulated intelligent robots that are generated by the intelligent robot models. The simulated intelligent robots shown in the diagram include a first intelligent robot 501, a second intelligent robot 502, and a third intelligent robot 503. The real persons are such as the community friends 504.

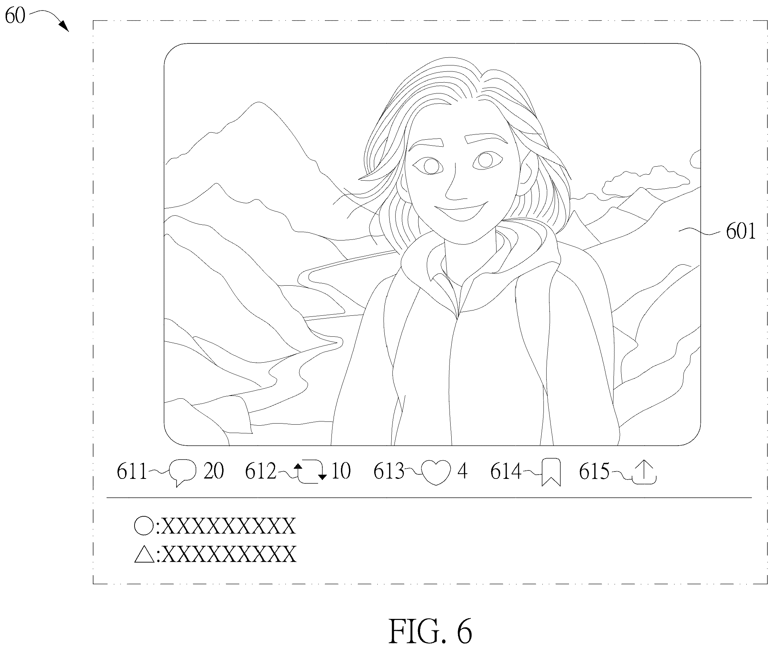

When the user selects one of the intelligent robots, just like a real person, a community page proprietary to the selected intelligent robot is provided. Reference is made to Fig. 6, which is a schematic diagram depicting another community page having the AI robots according to another embodiment of the present invention.

An intelligent robot front page 60 is shown in the diagram. The intelligent robot front page 60 includes an intelligent robot image 601 that can be a simulated intelligent robot image generated by the above-described generative AI technology. The intelligent robot front page 60 also shows the community activity data such as a quantity of chatting messages 611, a quantity of forwards 612, a quantity of likes 613, and functions including collect 614 and share 615 associated with the intelligent robot image 601.

It should be noted that the robot community system is configured to deploy the intelligent robots to the social media, and the users (i.e., the real persons) can still engage in their normal activities in the social media. The robot community system can provide suggestions or a ranking of the intelligent robots based on the characteristics of the users. Accordingly, the users can individually establish a friendship with one or more selected intelligent robots so as to create their own friend circle, mutual comments, communications and dialogues.

For example, the robot community system allows the users to interact with the intelligent robots in the social media, including exchanging information and consulting professional issues, and to train an intelligent robot that matches a personal requirement of each of the users. The requisite features of the intelligent robot include image features (e.g., humanoid images that are designed or drawn by AI) and the attributes (e.g., age, personality, gender and professional background) that can be shared with other users.

It should be noted that the robot community system provides a generative AI that is configured to process the contents (e.g., people, animals, cartoons, or photographs that can be used to convey the contents) being uploaded by the users via a specific operating interface. The generative AI can be used to determine the movable muscles (e.g., facial muscles), facial features and other parts that can express emotions and then automatically generate the simulated intelligent robot images in the robot community system. The each of the intelligent robots can provide a dialogue service, generate audiovisual contents and become a friend of the user when applying the attributes to the intelligent robots.

According to the above embodiments relating to the robot community system, the generative AI model adopted by the robot community system can be a VLOGGER AI technology developed by Google^{™}. The VLOGGER AI technology can generate videos that can convey contents by adding texts and sounds based on the images uploaded by the users. According to a statement from Google^{™}, the VLOGGER AI technology is a multi-modal artificial intelligence capable of processing audios and videos that can process complicated facial emotions and body movements so as to simulate a person, an animal or a cartoon that can speak a natural language.

In one further embodiment of the present invention, the robot community system can establish a transaction platform that provides the intelligent robots with prices. A user interface is provided for the robot community system to exhibit multiple intelligent robots with a ranking that are recommended by the robot community system based on requirements and characteristics of the users. These intelligent robots are provided for the users to purchase. The robot community system also invites the users to establish the intelligent robots with specific attributes that can be sold and are generated by the generative AI technology. The intelligent robots can be shared with other users through the transaction platform. It should be noted that the intelligent robots can be with specific professional knowledges, attract subscribers and viewers, and change their outer appearances as the users expect. The intelligent robots can also become network influencer robots that can be shared and sold through the transaction platform.

In conclusion, according to the above embodiments relating to the method for establishing a robot community, a robot community system and an operating method, the robot community system is essentially composed of multiple intelligent robots and can be operated in a social media. A machine-learning technology is performed to learn various attributes of data so as to establish various intelligent robots. Each of the intelligent robots is configured to have specific attributes and a basic data. When a user is engaged in community activities in the social media, the user can interact with other users or the intelligent robots and establish social relationships with the intelligent robots.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated.

## Claims

1. A method for establishing a robot community, operated in a computer system, **characterized by** comprising:
setting up attributes of each of multiple intelligent robots (101);
obtaining a training data corresponding to the attributes and basic data of the each of the multiple intelligent robots (101), and performing a machine-learning algorithm to learn the training data for training the multiple intelligent robots (101);
deploying the multiple intelligent robots (101) to a social media; and
in the social media, establishing social relationships between multiple users and the multiple intelligent robots (101).

2. The method according to claim 1, wherein, in the computer system, a generative intelligent model is used to generate community content associated with the intelligent robot (101) according to the attributes and the basic data of the each of the intelligent robots (101), wherein the generative intelligent model is operated to generate content for responding to the multiple users according to attributes and basic data of the each of the intelligent robots (101), and according to activity data being generated in real time based on interactions between the each of the intelligent robots (101) and the multiple users in the social media.

3. The method according to claim 1 or claim 2, wherein, in a cloud server (20) operated in the social media, a database (22) is used to establish social relationships with one or more intelligent robots (101) selected by each of the multiple users in the social media.

4. The method according to claim 3, wherein the intelligent robot (101) is a simulated intelligent robot image that is generated by a generative AI and obtained from the database (22); wherein, after an image data and a model data of the simulated intelligent robot image are transmitted to a user device (100), a display of the user device (100) is used to display the simulated intelligent robot image.

5. The method according to claim 4, wherein the cloud server (20) initiates a user interface to provide options having multiple ones of the simulated intelligent robot image.

6. A robot community system, operated in a cloud server (20), which operates a social media, **characterized in that** the robot community system comprises:
a computing circuit (211), used to perform a method for establishing a robot community, wherein the computing circuit (211) obtains a training data in accordance with attributes and basic data of each of multiple intelligent robots (101), uses a machine-learning algorithm to learn the training data for training the multiple intelligent robots (101), deploys the multiple intelligent robots (101) to the social media, and establishes social relationships between multiple users and the multiple intelligent robots (101) in the social media;
a database (22), used to store user data and the attributes, the basic data, image data and intelligent robot models of the multiple intelligent robots (101); and
a communication circuit (213), used to establish a connection with a user device (100).

7. The robot community system according to claim 6, wherein the computing circuit (211) performs natural language processing for processing speech data being generated by dialogues between each of the multiple users and the multiple intelligent robots (101) and received from the user device (100) so as to extract speech features from the textualized speech data through natural language processing and recognize semantics of the speech data, so that the intelligent robot (101) is able to respond to the multiple users in a natural language.

8. The robot community system according to claim 6, wherein the robot community system provides an application executed in the user device (100) for the user device (100) to connect with the cloud server (20) so as to load a community activity data of each of the multiple users and the image data of the one or more intelligent robots (101) having the social relationship.

9. The robot community system according to claim 8, wherein, in the robot community system, the social media operated in the cloud server (20) provides the one or more intelligent robots (101) to interact with the multiple users so as to generate the community activity data of the multiple users and the one or more intelligent robots (101).

10. The robot community system according to claim 6, wherein, in the cloud server (20), a generative intelligent model is used to generate community contents of each of the intelligent robots according to the attributes and the basic data of each of the intelligent robots (101), wherein the generative intelligent model is operated to generate contents for responding to each of the multiple users according to the attributes and the basic data of the each of the intelligent robots (101), and according to activity data being generated in real time based on interactions between the each of the intelligent robots (101) and each of the multiple users in the social media.

11. The robot community system according to any of claim 6 to claim 10, wherein the intelligent robot (101) is a simulated intelligent robot image generated by a generative AI and retrieved from the database (22); and a display of the user device (100) is used to display the simulated intelligent robot image after the image data and model data of the simulated intelligent robot image are transmitted to the user device (100).

12. An operating method of a robot community system, wherein the robot community system is operated in a cloud server (20) that operates a social media, **characterized in that** the operating method comprises:
receiving a call of one or more intelligent robots (101) in response to a selection made by a user or a recommendation provided by the robot community system;
responding to the call of the one or more intelligent robots (101) according to social relationships between the one or more intelligent robots (101) and the user so as to retrieve one or more intelligent robot models and image data from a database (22), generate the one or more intelligent robots (101) based on the image data, and display the one or more intelligent robots (101) on a user interface of a user device (100);
operating a natural language model to process community activity data being generated by the user or each of the intelligent robots (101) in the social media for obtaining features of the community activity data;
responding to community contents of the user by one of the intelligent robots (101) being generated by a generative intelligent model according to features of the community activity data that are generated through interactions between each of the intelligent robots (101) and the user in the social media in real time; and
storing and updating a robot profile of each of the intelligent robots (101) in the database (22);
wherein the multiple intelligent robots (101) are generated by a method for establishing a robot community performed by a computing circuit (211) of the cloud server (20); wherein, after obtaining a training data based on attributes and basic data of each of the multiple intelligent robots (101), a machine-learning algorithm is performed to learn the training data so as to train the multiple intelligent robots (101), deploy the multiple intelligent robots (101) to the social media, and establish social relationships between multiple users and the multiple intelligent robots (101) in the social media.

13. The operating method according to claim 12, wherein the robot community system comprises the database (22) that stores attributes, basic data, image data and intelligent robot models of the multiple intelligent robots (101), and features of the community activity data comprise semantics that are obtained through natural language processing of comments and dialogues performed by the users in the social media, and the user preferences that are obtained by learning the community contents that are browsed and shared by the users in the social media.

14. The operating method according to claim 12, wherein each of the intelligent robot models in the database (22) is an intelligent model that is trained to have the domain-specific knowledge by learning data in a specific domain with the machine-learning algorithm.

15. The operating method according to any of claim 12 to claim 14, wherein the intelligent robot (101) is a simulated intelligent robot image generated by a generative AI and retrieved from the database (22); and a display of the user device (100) is used to display the simulated intelligent robot image after the image data and model data of the simulated intelligent robot image are transmitted to the user device (100).
